Europäisches Patentamt

European Patent Office

Office européen des brevets

(11) Numéro de publication: **0 337 865**
**A2**

## (12) DEMANDE DE BREVET EUROPEEN

(21) Numéro de dépôt: **89400975.2**

(22) Date de dépôt: **10.04.89**

(51) Int. Cl.⁴: **B 44 C 5/00**
B 44 F 1/06, B 05 C 19/00,
B 29 C 41/22, B 29 C 31/10,
B 44 C 3/04

(30) Priorité: **08.04.88 FR 8804698**

(43) Date de publication de la demande:
**18.10.89 Bulletin 89/42**

(84) Etats contractants désignés:
**AT BE CH DE ES FR GB GR IT LI LU NL SE**

(71) Demandeur: **Eveillard, Jean**
**45 rue Clisson**
**F-75013 Paris (FR)**

(72) Inventeur: **Eveillard, Jean**
**45 rue Clisson**
**F-75013 Paris (FR)**

(74) Mandataire: **Ohayon, Joseph**
**CABINET BROT ET JOLLY 83, rue d' Amsterdam**
**F-75008 Paris (FR)**

(54) **Dispositif et procédé pour le remplissage d'un intervalle compris entre deux parois transparentes ou translucides avec des produits granuleux de couleurs variées.**

(57) L'invention concerne un dispositif et un procédé pour le remplissage d'un intervalle compris entre deux parois transparentes ou translucides, avec des produits granuleux de couleurs variées.

Le dispositif comprend une pluralité de réservoirs distributeurs (18, 66) contenant un produit granuleux de couleur déterminée et reliés à des têtes d'injection (24) permettant l'écoulement du produit dans l'ouverture supérieure de l'intervalle, et des moyens de commande (36) permettant de faire varier l'écoulement du produit des têtes (24) dans ledit intervalle.

FIG.1

EP 0 337 865 A2

Bundesdruckerei Berlin

**Description**

## DISPOSITIF ET PROCEDE POUR LE REMPLISSAGE D'UN INTERVALLE COMPRIS ENTRE DEUX PAROIS TRANSPARENTES OU TRANSLUCIDES, AVEC DES PRODUITS GRANULEUX DE COULEURS VARIEES.

La présente invention concerne un dispositif permettant de remplir un intervalle compris entre deux parois d'un récipient, dont l'une au moins est translucide ou transparente, avec des produits granuleux de diverses couleurs, qui se déposent en couches formant entre lesdites parois des motifs décoratifs variés. Elle concerne également un procédé de remplissage d'un tel récipient, ainsi que les produits obtenus par ce procédé.

L'invention peut trouver des applications intéressantes dans des domaines aussi variés que la réalisation de panneaux décors, de vitraux, de pots de fleurs, de vases, de flacons de sels de bains, de pots décors, d'abat-jour, de pieds de lampes, de mini-serres, de sucriers, de jardins japonais, de machines-jouets, etc...

On connaît déjà un procédé de remplissage d'un récipient, tel que flacon ou bouteille, qui consiste à verser successivement dans le récipient jusqu'à remplissage, plusieurs couches de matière granuleuse, par exemple du sucre, du sel, ou des sels de bain, chaque couche ayant une couleur différente. Ces flacons sont certes d'un bel effet décoratif, mais les motifs que l'on peut réaliser sont monotones et en nombre restreint : il s'agit toujours de stratifications déposées sans recherche, ni effet artistique. De plus, chaque couche de matière granuleuse colorée doit remplir toute la section du récipient, alors que c'est seulement la pellicule en contact avec la paroi du récipient qui est visible. La partie centrale du récipient est donc remplie de matière colorée qui ne contribue pas à l'effet décoratif.

Il existe également sur le marché des tableaux décoratifs constitués par un corps creux parallélépipédique et très plat, qui est partiellement rempli de sables de couleurs et granulométries différentes, le tout baignant dans un liquide. Lorsqu'on retourne un tel tableau, les fond du tableau en formant des strates d'épaisseurs et couleurs variables imitant un paysage vallonné.

Toutefois, du fait que les grains tombent de façon incohérente, on ne peut ni prévoir ni intervenir sur la forme du relief et la répartition des couleurs et couches déposées. Aucune possibilité n'est offerte par de tels tableaux de réaliser des motifs programmables à l'avance, ayant un caractère artistique plus recherché, qui s'apparente à celui de la peinture.

La présente invention propose un dispositif permettant à un opérateur de programmer à l'avance la distribution des différents produits granuleux et de décider lui-même du type des décors qu'il désire réaliser, ces derniers pouvant varier à l'infini selon le sens artistique et l'ingéniosité de l'opérateur.

L'invention concerne donc un dispositif de remplissage d'un intervalle compris entre deux parois translucides ou transparentes d'un récipient, avec différents produits granuleux de couleurs variées. D'une façon générale, ce dispositif se caractérise en ce qu'il comprend :
- une pluralité de réservoirs distributeurs contenant chacun un produit granuleux d'une couleur déterminée, et qui sont reliés par l'intermédiaire de tuyaux souples à des têtes d'injection munies de clapets ou trappes permettant l'écoulement des produits granuleux par simple gravité,
- un plateau-support sur lequel le récipient est posé, lesdites têtes d'injection débouchant au-dessus de l'ouverture supérieure dudit intervalle,
- et des moyens de commande permettant d'agir, conformément à un programme établi à l'avance, à la fois sur le mouvement relatif des têtes d'injection par rapport au plateau et les unes par rapport aux autres, sur la vitesse, l'amplitude et le sens dudit mouvement ainsi que sur la durée et la fréquence de l'ouverture des différents clapets ou trappes.

Dans un premier mode de réalisation de l'invention, ledit récipient est constitué par deux parois tubulaires concentriques définissant entre elles un intervalle annulaire, au moins la paroi tubulaire extérieure étant transparente. Les sections extérieure et intérieure du récipient sont circulaires, le récipient pouvant être de forme cylindrique ou tronconique. Le récipient est posé au centre d'une platine tournante entraînée en rotation par un moteur pas à pas ou analogique programmé, les têtes d'injection étant maintenues en des positions fixes au-dessus de la périphérie supérieure de l'intervalle.

Pour le maintien du récipient sur la platine, on utilise un socle muni de doigts de centrage qui s'engagent dans des trous formés sur la platine, ledit socle présentant sur sa face supérieure une cavité annulaire pour le positionnement des deux parois tubulaires.

Dans le cas de la réalisation de pots décors, de vases ou de récipients munis d'un fond, ayant ou non une double paroi, le socle comporte sur sa face supérieure une cavité évidée sur toute sa surface, de forme circulaire, polygonale ou toute autre forme géométrique, de manière à positionner la paroi latérale du récipient.

Pour tirer tout ou partie d'un motif décoratif sans pour autant changer ledit programme de base, ni la position respective des têtes d'injection, il est possible de commuter des têtes d'injection accolées deux à deux. En conséquence, une première série de têtes d'injection produit une teinte de fond venant par exemple d'un réservoir unique de matière colorée, l'autre série de têtes accolées définissant le motif recherché avec un grand nombre de combinaisons possible.

Dans un second mode de réalisation, le récipient est constitué par deux films parallèles tirés à partir de deux rouleaux d'alimentation et définissant entre eux un intervalle lamellaire, les têtes d'injection étant disposées en ligne au-dessus de l'ouverture formée entre les films et étant entraînées en mouvement linéaire alternatif, par un moteur pas à pas ou analogique programmé.

Il est encore possible de réaliser sur un décor de fond qui est fourni par une première série de têtes d'injection fixes disposées en ligne, alimentées en matière granuleuse d'une seule teinte, un motif qui est donné par une seconde série de têtes d'injection montées coulissantes en bloc, alimentées en matière granuleuse de différents coloris, un système permettant d'interrompre l'alimentation de la matière granuleuse de fond fournie par l'une quelconque des têtes d'injection de la première série lorsqu'une tête d'injection de la seconde série arrive à son niveau. Il se produit en quelque sorte une commutation de l'alimentation de la matière granuleuse de fond sur la matière granuleuse du décor.

Les têtes d'injection sont avantageusement réalisées sous forme de tubes rigides verticaux de section comportant au moins une face plane et de préférence carrée, alimentés à leur extrémité supérieure en produit granuleux, par un tube souple coulissant avec jeu à l'intérieur de ladite section et dont l'extrémité inférieure est taillée en biseau vers la face plane et est obturée par une trappe montée coulissante en liaison flexible dans le plan de la surface biseautée, entre une position fermée et une position où il ne laisse ouvert qu'une fente rectangulaire pour l'écoulement par gravité d'un flux de matière granuleuse en forme de pinceau, ladite trappe étant actionnée par un électro-aimant fixé sur le tube à l'opposé de ladite face plane, l'électro-aimant étant piloté par un dispositif programmable, par exemple de type électronique.

Grâce à cette disposition en forme biseautée, on obtient d'une part un flux de matière en forme de pinceau permettant d'obtenir des dessins plus précis qu'avec des tubulures de section ronde (suite à des essais) et d'autre part, de pouvoir accoler les tubes biseautés deux par deux par leur face plane la plus longue. Les jets de matière granuleuse sont très voisins et par conséquent, créent des zones où les couleurs se fondent ou varient progressivement en passant par des nuances intermédiaires.

Selon un mode préférentiel de l'invention, le dispositif de fixation des têtes d'injection est constitué par une plaque percée sur toute sa surface d'une pluralité de trous, les têtes d'injection étant positionnées à la verticale desdits trous répartis le long d'une circonférence de diamètre égal à celui de l'intervalle à remplir.

Selon l'invention, on peut obtenir des effets artistiques originaux en plaçant les têtes d'injection côté à côte le long d'un arc de cercle seulement et non réparties de façon équidistante sur toute la longueur de la circonférence.

Pour faciliter l'introduction des matières granuleuses entre les parois qui définissent l'intervalle à remplir, on peut insérer dans l'ouverture dudit intervalle des moyens de guidage constitués par exemple par deux éléments tronconiques concentriques, l'élément intérieur se rétrécissant vers le haut, tandis que l'élément extérieur s'évase vers le haut. Selon une caractéristique importante de l'invention, la matière granuleuse subit préalablement au remplissage, un traitement grâce auquel les grains sont susceptibles de se souder entre eux s'ils sont chauffées ultérieurement à une température prédéterminée. Il devient ainsi possible après remplissage de l'intervalle annulaire ou lamellaire de chauffer la matière pour provoquer sa prise, puis de démouler l'objet monobloc ainsi obtenu.

La matière granuleuse peut être de toute nature appropriée. A titre d'exemple, la matière granuleuse est constituée par du sucre, du sel, du sable, ou encore des microbilles de verre ou de matière synthétique de fine granulométrie, ladite matière ayant subit préalablement au remplissage, un traitement de coloration et un traitement grâce auquel les grains sont susceptibles de se souder entre eux s'ils sont chauffés ultérieurement à une température prédéterminée, par exemple en la malaxant avec une matière thermoplastique en solution, par exemple à base de segments polyamides rigides et de segments polyéthers souples dans de l'alcool ou à base de copolymères d'éthylène-acétate de vinyle dans un solvant de type trichloroéthylène, puis en ajoutant une poudre de matière thermoplastique qui assure la cohésion de la matière, lors de sa fusion.

Ladite matière pulvérulente peut être constituée par des segments polyamides rigides et des segments polyéthers souples. On peut également utiliser une poudre de copolymères d'éthylène-acétate de vinyle, (E.V.A.) ou toute autre poudre thermoplastique.

Pour obtenir des objets monoblocs démoulables, par exemple de forme annulaire, on utilise un récipient qui comprend deux tubes rigides de maintien disposés concentriquement, le manchon intérieur étant en métal conducteur de la chaleur et de préférence noirci sur sa face intérieure, et deux films tubulaires en matière synthétique transparente ou translucide et pouvant tenir à une température supérieure à la température de fusion de la matière pulvérulente de cohésion, lesdits tubes étant glissés, l'un contre la face extérieure du tube intérieur et l'autre contre la face intérieure du tube extérieur, avec interposition d'un agent démoulant.

Après remplissage de l'intervalle annulaire formé entre les tubes de matière synthétique, on introduit dans le passage central un corps de chauffe qui chauffe par rayonnement le tube intérieur métallique, puis par conduction le tube de matière synthétique et la matière granuleuse comprise entre lesdits tubes. Les grains de matière se soudent les uns aux autres formant un objet monobloc qui est ensuite démoulé de l'intérieur des deux tubes de maintien.

L'invention sera mieux comprise à la lecture de la description qui va suivre d'un mode de réalisation préférentiel, donné uniquement à titre d'exemple non limitatif, en regard des dessins annexés dans lesquels :

La figure 1 est une vue en perspective générale du dispositif selon un premier mode de réalisation, pour le remplissage d'un intervalle annulaire ;

La figure 2 est une vue agrandie de 2 têtes d'injection accolées dont l'une est en coupe axiale, ces têtes étant plantées sur la plaque de support du dispositif de la figure 1, la trappe de l'une étant respectivement fermée et l'autre ouverte ;

La figure 3 est une vue en coupe verticale d'un récipient formé de deux parois tubulaires ;

La figure 4 est une vue en coupe verticale d'un récipient constitué par un pot et par une paroi interne concentrique ;

La figure 5 est une vue en coupe suivant la ligne VI-VI de la figure 3 ;

La figure 6 est une vue en perspective du corps tubulaire obtenu après démoulage des éléments de maintien de la figure 3 ;

La figure 7 est une vue en coupe d'une pièce cylindrique en entonnoir ;

La figure 8 est une vue en coupe du siège d'un réservoir de matière granuleuse ;

La figure 9 est une vue en coupe d'une tête d'injection avec bille formant clapet ;

La figure 10 est une vue en perspective d'un dispositif selon l'invention pour le remplissage en continu d'un intervalle linéaire compris entre deux films plats ; et

La figure 11 est une autre vue de la figure 10.

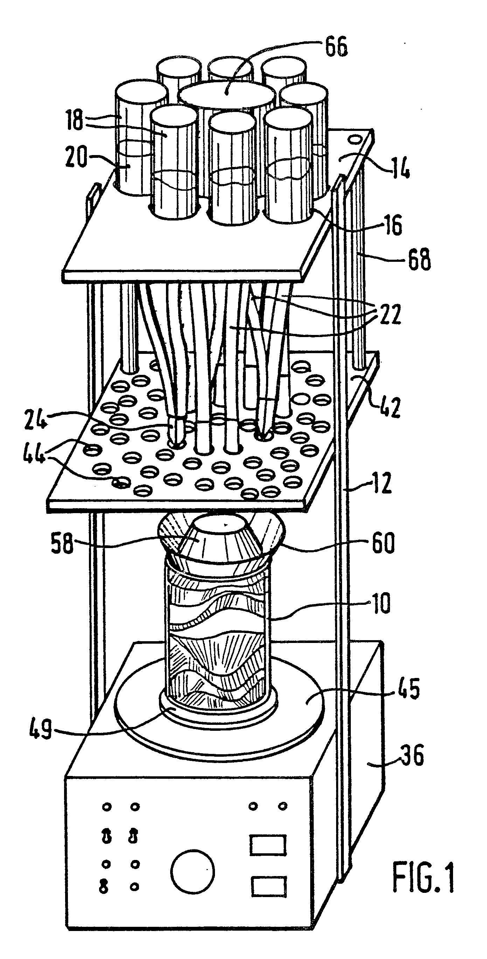

Avec référence à la figure 1, on décrira tout d'abord un dispositif pour le remplissage d'un intervalle annulaire compris entre deux parois concentriques d'un récipient 10.

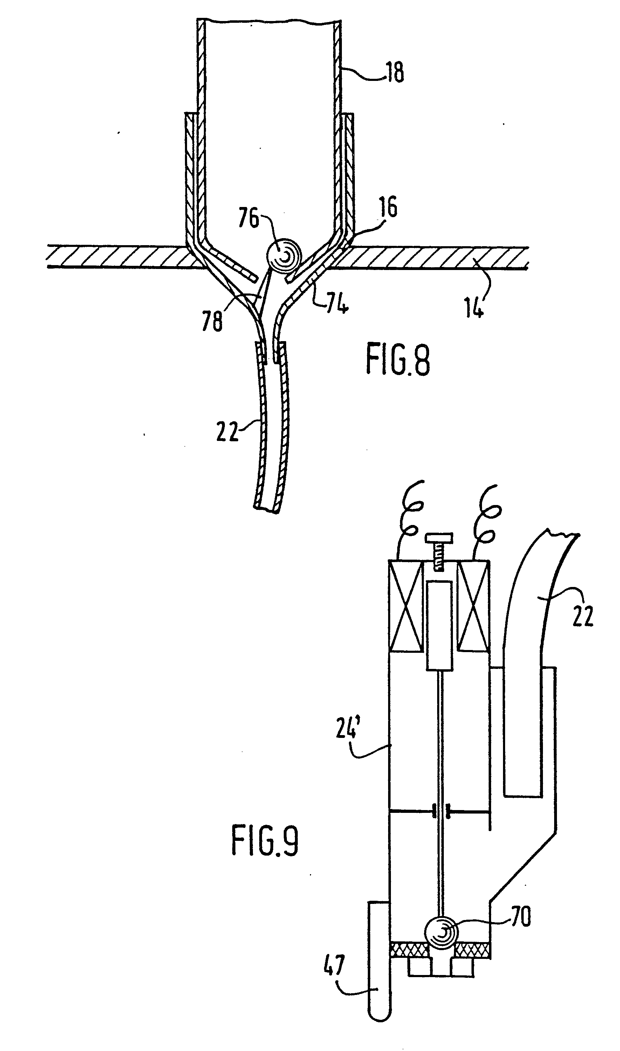

Ce dispositif comprend un bâti formé de plusieurs montants 12, par exemple du type à crémaillère, sur lesquels des supports peuvent être accrochés à hauteur réglable. A la partie supérieure du bâti est fixée une première plaque horizontale 14 percée d'une pluralité de trous épaulés 16 (Figure 8) servant de siège à des réservoirs 18 et 66. Les réservoirs contiennent des matières granuleuses 20 de couleurs différentes ou non, qui peuvent être constituées par du sucre, du sel, du sable, des microbilles de verre. Comme on l'a expliqué précédemment, les grains de matière peuvent subir un traitement qui permet leur soudage lorsqu'ils sont portés à une température prédéterminée.

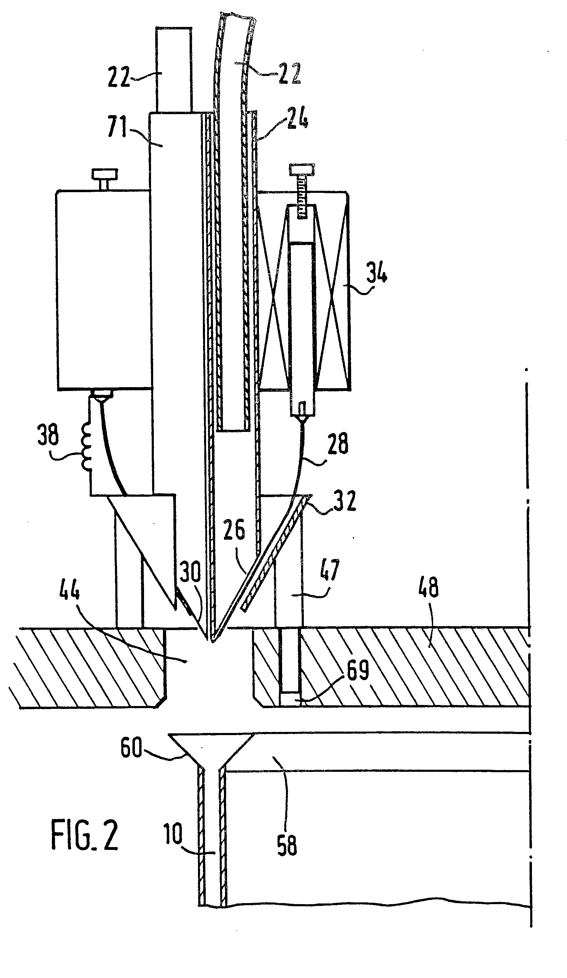

Les réservoirs 18 en circonférence présentent à leur partie inférieure un orifice de sortie à travers lequel la matière granuleuse peut s'écouler par gravité. Le réservoir central 66 pour la couleur de fond présente à sa partie inférieure autant d'orifices de sortie qu'il y a de réservoirs 18. Aux orifices de sortie sont raccordés des tuyaux souples 22 orientés sensiblement verticalement pour permettre à la matière granuleuse de s'y écouler par gravité. L'extrémité inférieure desdits tuyaux est emmanchée avec jeu dans les têtes d'injection 24, et sur une longueur suffisante pour compenser la différence de longueur nécessaire de tuyau lors d'un changement de position des têtes d'injection sur leur plaque support 42. Les têtes d'injection 24 sont constituées par des tubes de distribution rigides 24', également verticaux et qui, comme le montre plus clairement la figure 2, ont une section carrée et sont taillés en biseau à leur extrémité inférieure 26. Ladite extrémité est obturée par une trappe flexible du type lame élastique ou feuillard 28 susceptible de coulisser dans le plan de la surface biseautée entre une position fermée et la position qui est représentée sur la figure 2, pour laquelle elle laisse ouverte une faible fente 30 à travers laquelle un flux de matière granuleuse en forme de pinceau peut s'écouler.

Chaque trappe 28 coulisse par exemple dans un guide 32 et est mue par un électro-aimant 34. Elle est normalement rappelée à sa position fermée sous l'action, du poids du noyau mobile de l'électro-aimant avec l'aide l'éventuelle d'un ressort de rappel 38. Elle est sollicitée vers sa position ouverte par l'électro-aimant 34 commandé par un dispositif de pilotage programmé 36, fixé par exemple à la base du bâti et dont on décrira le mode d'action par la suite. L'électro-aimant 34 est fixé sur le tube d'alimentation 24', au moyen d'une attache appropriée en rapport avec le type d'électro-aimant choisi. Chaque tête d'injection dispose à sa partie inférieure d'un pied de maintien épaulé 47 fixé sur le guide 32.

En se référant à nouveau à la figure 1, les têtes d'injection 24 sont portées par la plaque support 42 fixée sur le bâti sous la plaque 14 par l'intermédiaire des colonnes 68. La plaque 42 est percée d'une pluralité de trous 44 disposés selon des cercles concentriques centrés sur le centre géométrique de la plaque. Les têtes d'injection munies des pieds 47 sont plantées dans des trous de positionnement 69 de manière que chacune soit à la verticale du trou 44 choisi. Les trous 44 appartiennent à un même cercle choisi avec un diamètre aussi voisin que possible de celui du récipient 10 à remplir. Le jet de matière granuleuse peut être canalisé vers l'ouverture de l'intervalle annulaire au moyen de deux guides tronconiques concentriques 58, 60, le guide intérieur 58 se rétrécissant vers le haut, tandis que le guide extérieur s'évase vers le haut.

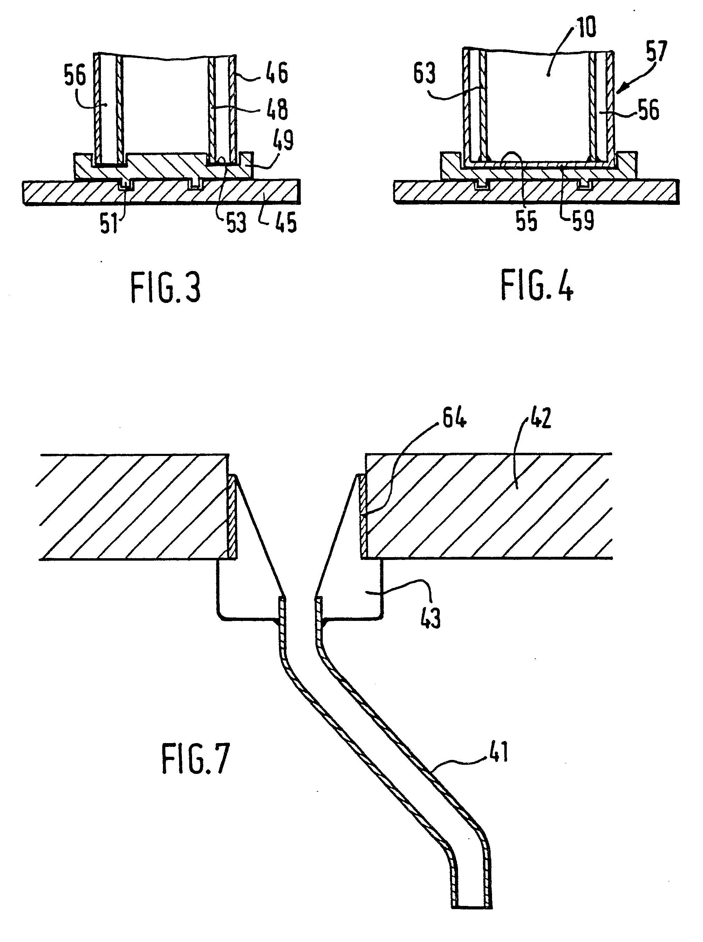

Comme le montre les figures 1, 3 et 4, le récipient est posé sur un socle de maintien 49, lui-même fixé sur une platine tournante 45 au moyen de doigts de centrage 51 qui s'emboîtent dans des trous formés sur la platine. Ledit socle présente sur sa paroi supérieure, soit une cavité annulaire 53 (figure 3) pour le centrage de deux parois de maintien 46, 48 tubulaires et concentriques, entre lesquelles la matière granuleuse doit être versée, soit une cavité 55 creuse sur toute sa surface de forme circulaire, polygonale, ou autres, correspondant à la section inférieure du récipient, pour le centrage d'un pot 57 muni d'un fond 59.

La platine tournante 45 est entraînée en rotation par un moteur pas à pas ou par un moteur analogique, dont la vitesse, le sens et l'amplitude de rotation sont commandés par le dispositif de pilotage programmé 36.

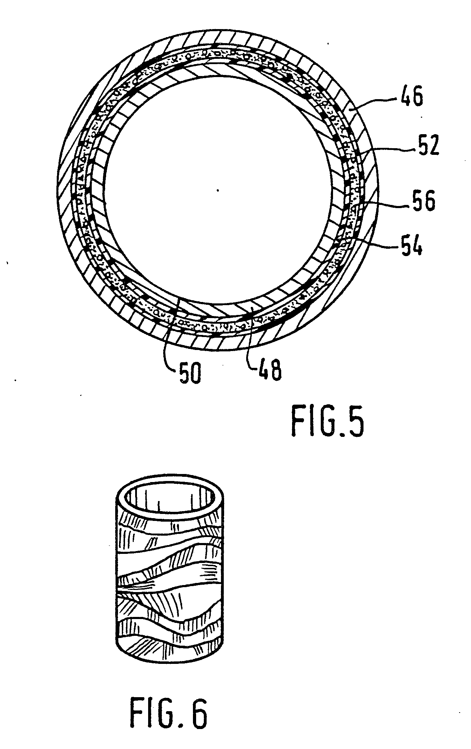

On décrira à présent le procédé de remplissage de l'intervalle 56 compris entre deux parois concentriques 46,48 comme illustré par les figures 3 et 5. La paroi de maintien extérieure 46 est de préférence transparente, tandis que la paroi intérieure 48 est un tube en métal conducteur de la chaleur, avantageusement recouvert d'une couche noire 50 sur sa face intérieure. Les deux parois sont recouvertes sur leurs faces en regard, d'un agent démoulant. Deux films tubulaires 52, 54 en matière synthétique transparente sont ensuite glissés l'un contre la face intérieure de la paroi transparente 46 et l'autre contre la face extérieure de la paroi métallique 48. Ladite matière synthétique est choisie pour supporter la montée en température nécessaire pour souder la matière granuleuse.

En fonctionnement, le dispositif 36 commande simultanément et selon un programme prédéterminé, la rotation du récipient sur lui-même, ainsi que l'ouverture des différentes trappes 28. Les matières granuleuses viennent remplir progressivement l'intervalle annulaire en formant des motifs artistiques selon le programme choisi et la position respective des têtes entre elles.

Après remplissage du récipient, les deux cônes 58,60 sont retirés afin d'évacuer la matière granuleuse excédentaire et l'on introduit dans le tube intérieur un corps de chauffe, composé par exemple de résistances électriques réparties sur toute sa surface. Le tube métallique noirci est donc chauffé par rayonnement et la chaleur est communiquée par conduction au film tubulaire 54 ainsi qu'à la matière granuleuse, et à la poudre qui l'enrobe, laquelle est chauffée jusqu'à sa température de fusion. Cette température étant inférieure à la température de fusion des films tubulaires 52, 54, ces derniers résistent à ce traitement thermique.

Après refroidissement du récipient, on procède au démoulage de l'ensemble formé par le corps soudé monobloc pris en sandwich entre les deux films tubulaires 52, 54. Pour cela, on commence par retirer le socle 49 puis le tube de maintien intérieur 48, qui, à cet effet, peut être constitué de plusieurs portions de cylindre articulées entre elles par des charnières qui permettent de les replier vers l'intérieur. L'ensemble 52, 54, 56 peut alors être retiré du récipient 46, lui-même articulé par des charnières vers l'extérieur, l'agent démoulant facilitant ce retrait.

Les tubes de maintien 46, 48 peuvent avoir une légère conicité évasée vers le haut, de manière que la matière granuleuse glisse sur la paroi extérieure. On a en effet constaté que les motifs qui se forment sont plus nets sur la paroi où se fait l'impact, et plus flous sur l'autre paroi.

D'autre part, cette conicité facilite le démoulage de l'objet ne nécessitant plus des portions de cylindre articulées citées plus haut.

La figure 6 représente l'objet tubulaire ainsi obtenu. Celui-ci est rigide et laisse voir à travers le film extérieur les motifs décoratifs, formés par la matière granuleuse rigidifiée. Un tel objet peut être utilisé à des fins très variées, par exemple pour réaliser des abat-jour ou des lampadaires.

Dans le cas de la réalisation de pots selon la figure 4, on colle sur le fond 59 du pot, une paroi tubulaire 63. Pour le remplissage, on opère comme précédemment, sauf que l'on ne démoule pas le corps monobloc qui se forme dans l'intervalle 56. Un tel pot peut servir de flaçon pour des sels de bain, de vases, de pots de fleurs, de pieds de lampe etc...

Un corps de chauffe peut être introduit dans le volume intérieur du pot en contact avec le tube 63 pour solidifier les particules entre elles ayant subit un traitement comme déjà cité, mais selon un mode préférentiel de l'invention, les pots se prêtent mieux à un chauffage extérieur par un élément de chauffage de type laminaire (à circuits imprimés), ou par chauffage dans un four.

On peut également remplir le volume intérieur du récipient 10 d'une matière quelconque (par exemple du terreau, du sucre), versée en vrac pour maintenir le tube 63 cette fois-ci non collé, remplir l'espace annulaire 56 comme déjà cité, puis retirer délicatement le tube 63 afin de conserver intacts les motifs. Pour un observateur non averti, il est difficile de deviner comment les motifs ont été formés sur la périphérie seulement du flacon.

Plusieurs modifications peuvent être apportées au dispositif et au procédé de remplissage.

Le siège des récipients, comme réprésenté sur la figure 8, comprend un entonnoir 74 à la sortie duquel est emmanché le tube d'alimentation 22. L'entonnoir reçoit le récipient 18 qui est percé d'un orifice de sortie normalement obturé par une bille 76 formant clapet. Lorsque le récipient est posé dans l'entonnoir, une pointe 78 de ce dernier soulève la bille, de sorte que la matière granuleuse s'écoule par gravité. Il devient possible grâce à un tel dispositif de transférer un ou plusieurs récipients d'une place à une autre pendant le processus même du remplissage, ce qui permet d'obtenir des variations des motifs formés.

L'encombrement des électro-aimants, empêche de rapprocher au-delà d'une certaine limite les têtes d'injection l'une de l'autre sur une circonférence de petit diamètre autour de laquelle elles sont réparties, et surtout pour les électro-aimants des têtes d'injection de couleur de fond alimentées par un réservoir central 66, lesdits électro-aimants étant de préférence à l'intérieur de la courbure du cercle sur lequel les têtes sont disposées.

Une pièce cylindrique en entonnoir 43 (Figure 7) munie d'une tubulure rigide 41 convenablement orientée pour déboucher au-dessus de l'ouverture supérieure de l'intervalle d'un plus petit diamètre, palie à cet inconvénient. Un joint souple 64 en feutre par exemple, maintient cette pièce dans le trou correspondant où une paire de têtes d'injection a été positionnées. Cet agencement est également intéressant pour obtenir un mélange plus intime des matières granuleuses des têtes accolées et confère une liberté dans le positionnement des têtes d'injection relativement à l'espace annulaire à remplir.

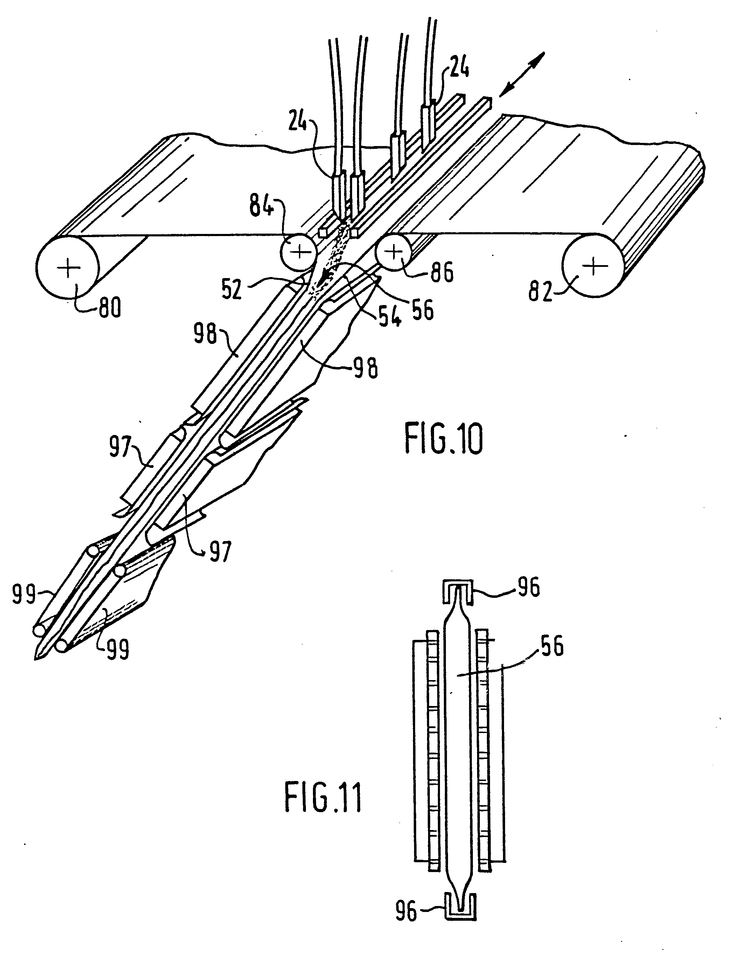

Enfin, avec le procédé selon l'invention, on peut réaliser en continu des panneaux décors. La figure 10 montre un dispositif permettant de fabriquer de tels décors. Deux films transparents ou translucides 52,54 venant de deux rouleaux d'alimentation 80, 82 passent sur des tambours 84, 86 parallèles et sont tirés vers le bas avec une inclinaison par rapport à la verticale. Les deux films sont parallèles et définissent entre eux un intervalle 56 à remplir de matières granuleuses colorées. Celles-ci sont injectées par une pluralité de têtes biseautées 24 disposées en ligne le long de l'ouverture supérieure de l'intervalle, et entraînées en mouvement linéaire alternatif.

Ces dits films remplis de matières granuleuses passent successivement entre deux éléments guide servant de corps de chauffe 98 puis entre deux autres éléments guide de refroidissement 97. Deux guides en forme de U 96 (figure 11) resserrent les bords latéraux des deux films l'un vers l'autre de manière à éviter les fuites de matières granuleuses, tout en permettant le glissement d'entraînement des films avant la cohésion par fusion de la poudre thermoplastique comme précité. Enfin, deux tapis d'entraînement 99 prennent en sandwich le panneau refroidi, tire les deux films parallèles avec la matière granuleuse.

Comme on l'a précisé précédemment, ces têtes biseautées peuvent aussi bien être fixes afin de fournir la couleur de fond. Une seconde série de têtes biseautées en ligne, mais animées d'un mouvement linéaire alternatif peut être prévue pour fournir les matières granuleuses donnant les motifs. Un dispositif est prévu pour que lorsqu'une tête mobile arrive devant une tête fixe, elle l'obture.

Il va de soi que les mouvements des têtes d'injection, de leurs trappes et de la platine peuvent être aussi bien commandés par un système mécanique, pneumatique ou manuel.

On mentionnera encore à tire de variante que les têtes d'injection peuvent être constituées chacune (figure 9) par un corps 24' d'axe vertical auquel se raccorde sur le côté le tuyau d'alimentation 22 venant du réservoir correspondant, ledit corps étant fermé par un fond muni d'un joint souple et pourvu d'un orifice sur lequel repose une bille 70 qui peut être soulevée pour laisser s'écouler le produit granuleux, par un électro-aimant 34 monté à la partie supérieure du corps et piloté par un dispositif programmable, par exemple de type électronique. La base inférieure de cette tête est convenablement épaulée pour s'engager dans les trous 44 de la plaque-support et verrouillée en rotation par le pied 47.

**Revendications**

1- Dispositif de remplissage d'un intervalle compris entre deux parois translucides ou transparentes d'un récipient, avec différents produits granuleux de couleurs variées, caractérisé en ce qu'il comprend :
- une pluralité de réservoirs distributeurs (18, 66) contenant chacun un produit granuleux (20) d'une couleur déterminée, et qui sont reliés par l'intermédiaire de tuyaux souples (22) à des têtes d'injection (24) munies de clapets ou de trappes coulissantes (28) permettant l'écoulement des produits granuleux par simple gravité,
- une platine support (45) sur lequel le récipient est posé, lesdites têtes d'injection débouchant en regard de l'ouverture supérieure dudit intervalle,
- et des moyens de commande (36) permettant d'agir, conformément à un programme établi à l'avance, à la fois sur le mouvement relatif des têtes d'injection par rapport au plateau, et les unes par rapport aux autres,sur la vitesse, l'amplitude et le sens dudit mouvement ainsi que sur la durée et la fréquence de l'ouverture des différents clapets ou trappes.

2- Dispositif selon la revendication 1, caractérisé en ce que ledit récipient est constitué par deux parois tubulaires concentriques définissant entre elles un intervalle annulaire fermé à sa partie inférieure par une paroi de fond, au moins la paroi tubulaire extérieure étant transparente, les parois du récipient étant maintenues par un socle (49) fixé de façon amovible sur la platine tournante (45), laquelle est entraînée en rotation par un moteur pas à pas ou analogique programmé, les têtes d'injection étant maintenues en des positions fixes au-dessus de la périphérie supérieure de l'intervalle.

3- Dispositif selon la revendication 1, caractérisé en ce que le récipient est constitué par deux films parallèles définissant entre eux un intervalle lamellaire, , l'un au moins des films étant transparent ou translucide, les têtes d'injection étant entraînées en mouvement linéaire alternatif au-dessus de l'ouverture supérieure de l'intervalle, par un moteur pas à pas ou analogique programmé.

4- Dispositif selon la revendication 3, caractérisé en ce qu'il comprend une première série de têtes d'injection fixes disposées en ligne, une seconde série de têtes d'injection montées coulissantes en bloc, lesdites séries de têtes se déplaçant parallèlement l'une par rapport à l'autre avec les sorties de matières proches l'une de l'autre, et un système permettant d'interrompre l'alimentation de la matière granuleuse de fond fournie par l'une quelconque des têtes d'injection de la première série lorsqu'une tête d'injection de la second série arrive à son niveau.

5- Dispositif selon la revendication 1, caractérisé en ce que pour le maintien du récipient sur la platine, ledit socle (49) est muni de doigts de centrage (51) qui s'engagent dans des trous formés sur la platine(45), ledit socle présentant sur sa face supérieure une cavité annulaire (53) pour le positionnement des deux parois tubulaires, ou une cavité (55) circulaire octogonale ou d'une autre forme pour le positionnement d'un pot à double ou simple paroi pourvu d'un fond.

6- Dispositif selon la revendication 1, caractérisé en ce que les têtes d'injection sont constituées par des tubes rigides verticaux (24) de section comportant au moins une face plane,alimentés à leur extrémité supérieure en produit granuleux, et dont l'extrémité inférieure (26) est taillée en biseau et est obturée par une trappe souple (28) montée coulissante, dans le plan de la surface biseautée, entre une position où il obture complètement l'ouverture inférieure et une position où il ne laisse ouvert qu'une fente rectangulaire (30) pour l'écoulement par gravité d'un flux de matière granuleuse, ladite trappe étant actionnée par un électro-aimant (34) fixé sur le tube même du côté de la face opposée à ladite face plane.

7- Dispositif selon l'une des revendications 1 et 6, caractérisé en ce que les tubes biseautés sont accolés deux par deux par leur face plane pour l'obtention de jets très voisins de matière granuleuse.

8- Dispositif selon la revendication 1, caractérisé par un dispositif de fixation des têtes d'injection (24), qui comprend une plaque-support (42) disposée horizontalement, percée d'une pluralité de trous (44) et pouvant être fixée à hauteur réglable sur un bâti (12), ladite plaque recevant les têtes d'injection plantées côte à côte au droit des trous (44) ou réparties le long d'une circonférence d'un diamètre égal à celui de l'intervalle à remplir, ces têtes étant disposées seules ou accolées deux à deux par leur face plane.

9.- Dispositif selon l'une des revendications précédentes, caractérisé en ce qu'il est pouvu d'une pièce entonnoir (43) muni d'une tubulure rigide (41) convenablement orientée pour déboucher au-dessus de l'ouverture supérieure d'un intervalle d'un plus petit diamètre, cet agencement assurant en outre un mélange plus intime des matières de deux têtes accolées et une liberté dans les positionnements des têtes.

10- Dispositif selon l'une des revendications précédentes, caractérisé en ce que la matière granuleuse est constituée par du sucre, du sel, du sable, ou encore des microbilles de verre ou de matière synthétique de fine granulométrie, d'excellents résultats ayant été obtenus avec du sel d'une granulométrie de l'ordre de 200 µm, ladite matière ayant subit préalablement au remplissage, un traitement de coloration et un traitement grâce auquel les grains sont susceptibles de se souder entre eux s'ils sont chauffés ultérieurement à une température prédéterminée, par exemple en la malaxant avec une matière thermoplastique en solution, par exemple à base de segments polyamides rigides et de segments polyéthers souples dans de l'alcool ou à base de copolymères d'éthylène acétate de vinyle dans un solvant de type trichloroéthylène, puis en ajoutant une poudre de matière thermoplastique qui assure la cohésion de la matière, lors de sa fusion.

11- Dispositif selon l'une des revendications précédentes, caractérisé en ce que le récipient comprend deux tubes rigides de maintien (46,48) disposés concentriquement, le tube intérieur (48) étant en métal conducteur de la chaleur et de préférence noirci sur sa face intérieure et deux films tubulaires (52,54) en matière synthétique, transparents ou translucides et pouvant tenir à la température de fusion de la poudre de traitement, lesdits tubes étant glissés, l'un contre la face extérieure du tube intérieur et l'autre contre la face intérieure du tube extérieure, avec interposition d'un agent démoulant.

12- Procédé de remplissage d'un intervalle annulaire défini entre deux parois de maintien et concentriques, avec des matières granuleuses de couleurs variées, ayant subi un traitement permettant le soudage des grains de matière lorsqu'ils sont portés à une température prédéterminée, caractérisé en ce qu'il consiste à placer contre les faces desdites parois deux films de matière synthétique transparente, à adapter dans l'ouverture supérieure de l'intervalle deux éléments de guidage en entonnoirs pour canaliser la matière granuleuse vers l'intervalle, à planter les têtes d'injection de manière que leurs extrémités inférieures débouchent au-dessus de l'ouverture de l'intervalle, puis après remplissage de l'intervalle, à chauffer l'une des parois de maintien jusqu'à ce que les grains de matière se soudent entre eux et enfin à démonter les deux parois de maintien.

13- Procédé de remplissage d'un pot pourvu d'un fond, caractérisé en ce qu'il consiste à introduire dans les pots une paroi de maintien tubulaire (63) fixée ou non sur le fond concentriquement à ce dernier, à remplir l'intervalle compris entre ladite paroi de maintien et la paroi latérale du pot, à retirer ou non la paroi de maintien et enfin à chauffer la paroi interne ou externe de manière à souder la matière granuleuse.

14- Procédé de remplissage en continu d'un intervalle lamellaire compris entre deux films plats de matière consiste à faire passer lesdits films sur deux tambours (84, 86) parallèles et séparés par une faible distance, à tirer parallèlement les films vers le bas et avec une inclinaison par rapport à la verticale, et à verser les matières granuleuses dans l'intervalle compris entre les films parallèles, puis à faire passer successivement les matières granuleuses prises en sandwich par les deux films parallèles dans un premier poste de chauffe, dans un poste de refroidissement pour enfin être tractées par deux tapis d'entraînement.

15- A titre de produits industriels nouveaux, vases, flacons de sels de bain, pots de fleurs, panneaux décoratifs, vitraux, abat-jour, jardins japonais, mini-serres, sucriers, machines-jouets ou tout autre objet réalisés par le procédé selon l'une des revendication 12 à 14.

FIG.1

FIG. 2

EP 0 337 865 A2

FIG.3

FIG.4

FIG.7

FIG.5

FIG. 6

FIG.8

FIG.9

FIG.10

FIG.11